# EUROPEAN PATENT APPLICATION

(11) **EP 4 624 116 A1**
(43) Date of publication of application: **01.10.2025**
(21) Application number: 25166649.1
(22) Date of filing: 27.03.2025
(51) Int. Cl.: B25J 15/00, B25J 15/06

(54) **HAND**

(30) Priority: 28.03.2024 JP 2024054585
(71) Applicant: KAWASAKI JUKOGYO KABUSHIKI KAISHA, Kobe-shi, Hyogo 650-8670 (JP)
(72) Inventor: YAMANE, Hideshi, KOBE-SHI (JP); YOSHIKUWA, Eiji, KOBE-SHI (JP); IWASAKI, Yukio, KOBE-SH (JP); ABE, Yoshinori, KOBE-SHI (JP)
(74) Representative: Müller-Boré & Partner Patentanwälte PartG mbB

(57) **Abstract**

An object is to enhance conveyance performance of a hand that places an article on a base with a hand and conveys the article. A hand 100 includes: a base 3; a first holder 4 that is supported to be movable in a predetermined first direction X with respect to the base 3 and holds an article W; a second holder 6 that is aligned with the first holder 4 in a second direction Z intersecting with the first direction X, is supported to be movable in the first direction X with respect to the base 3, and holds the article W; a first driver 5 that moves the first holder 4 and the second holder 6 in the first direction X; and an adjustor 9 that adjusts a position of one of the first holder 4 and the second holder 6 in the first direction X independently of the other.

## Description

### FIELD

The technique disclosed here relates to a hand.

### BACKGROUND

A known hand includes a holder that holds an article. Patent Document 1, for example, discloses a hand including a holder that holds an article and a base on which an article is placed. The hand moves the holder holding an article in a predetermined direction and places the article on the base. The hand conveys the article in a state where the article is placed on the base.

### CITATION LIST

### PATENT DOCUMENT

Patent Document 1: International Patent Publication No. 2021/025019

### SUMMARY

The hand is designed to hold articles of various sizes by enlarging the holder. However, the hand is desired to have further enhanced conveyance performance and there is room for further improvement in such a hand.

It is therefore an object of the technique disclosed here to enhance conveyance performance of a hand that places an article on a base with a hand and conveys the article. Solution to Problem

A hand disclosed here includes: a base; a first holder that is supported to be movable in a predetermined first direction with respect to the base and holds an article; a second holder that is aligned with the first holder in a second direction intersecting with the first direction, is supported to be movable in the first direction with respect to the base, and holds the article; a first driver that moves the first holder and the second holder in the first direction; and an adjustor that adjusts a position of one of the first holder and the second holder in the first direction independently of the other.

### Advantages of Invention

The hand can enhance conveyance performance.

### BRIEF DESCRIPTION OF THE DRAWINGS

FIG. 1 illustrates a configuration of a robot system.
FIG. 2 is a front view of a hand in a state where a second holder has moved upward.
FIG. 3 is a side view of the hand in a state where a first holder and the second holder are advanced and the second holder has moved upward.
FIG. 4 is a plan view of the hand in a state where the first holder and the second holder are retracted.
FIG. 5 is a rear view of the hand in a state where the second holder has moved upward.
FIG. 6 is a front view of the hand in a state where the second holder has moved downward.
FIG. 7 is a side view of the hand in a state where the first holder and the second holder are advanced in a first direction by an adjustor.
FIG. 8 illustrates a schematic hardware configuration of a controller.
FIG. 9 is a block diagram of a processor.
FIG. 10 is a flowchart of transfer of an article.

### DESCRIPTION OF EMBODIMENTS

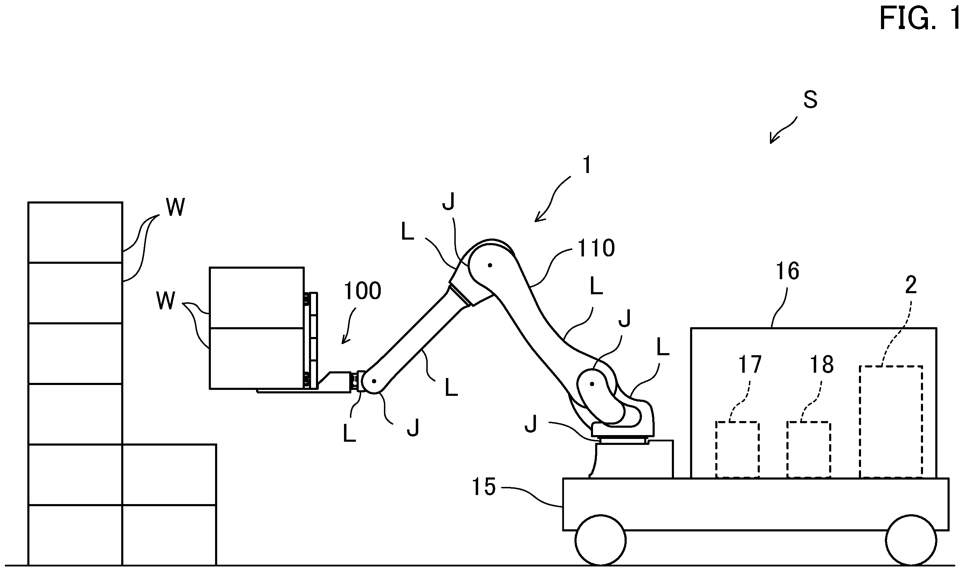

An exemplary embodiment will be described in detail hereinafter with reference to the drawings. FIG. 1 illustrates a configuration of a robot system S.

The robot system S is a system that transfers an article. This embodiment is directed to a case where articles W stacked at a predetermined position are transferred to a target position. The articles W are, for example, cardboard boxes. The robot system S includes a robot 1 that transfers articles W and a controller 2 that controls the robot 1.

The robot 1 is, for example, an industrial robot. The robot 1 includes a robot arm 110 and a hand 100 coupled to the robot arm 110. In this example, the robot 1 further includes a carrier 15 and an equipment housing 16. The robot arm 110 is mounted on the carrier 15. The equipment housing 16 houses equipment necessary for controlling the robot 1 including the controller 2. The robot 1 autonomously moves by the carrier 15.

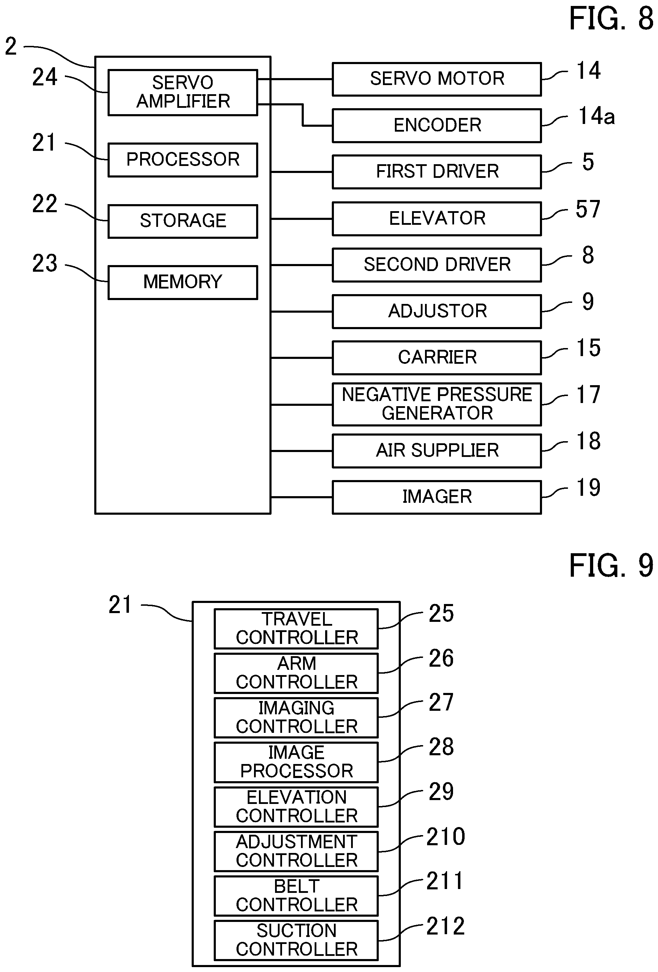

The robot arm 110 changes the position and posture of the hand 100. The robot arm 110 is a vertical articulated robot arm. The robot arm 110 includes links L, joints J connecting the links L, and a servo motor 14 (see FIG. 8) that rotationally drives the joints J. For example, the link L at one end of the robot arm 110 is coupled to the carrier 15 through the joint J to be rotatable about a rotation axis extending in the vertical direction. The robot arm 110 may be of a horizontal articulated type, a parallel link type, a Cartesian coordinate type, a polar coordinate type, or other types.

The hand 100 is an end effector of the robot arm 110. The hand 100 is coupled to the distal end of the robot arm 110. Specifically, the hand 100 is coupled to the link L at the opposite side to the link L coupled to the carrier 15. The hand 100 can take various postures depending on actions of the robot arm 110.

The carrier 15 moves the robot 1 on the floor or other places. The carrier 15 is not limited to an object that travels with wheels, and only needs to include a travelling device such as a crawler. The carrier 15 may be an automated guided vehicle (AGV), for example.

The equipment housing 16 houses a negative pressure generator 17 and an air supplier 18 in addition to the controller 2. The negative pressure generator 17 generates a negative pressure at suction pads 41 and suction pads 61 described later. For example, the negative pressure generator 17 is a vacuum pump or an ejector. In a case where the negative pressure generator 17 has a small size, for example, the negative pressure generator 17 is an ejector, the negative pressure generator 17 may be mounted on the hand 100. The air supplier 18 pumps air. The air supplier 18 supplies air to components such as a fixed driver 82 and an adjustor 9 described later. For example, the air supplier 18 is an air pump. The air supplier 18 may be located outside the carrier 15. The negative pressure generator 17 and the air supplier 18 are controlled by the controller 2.

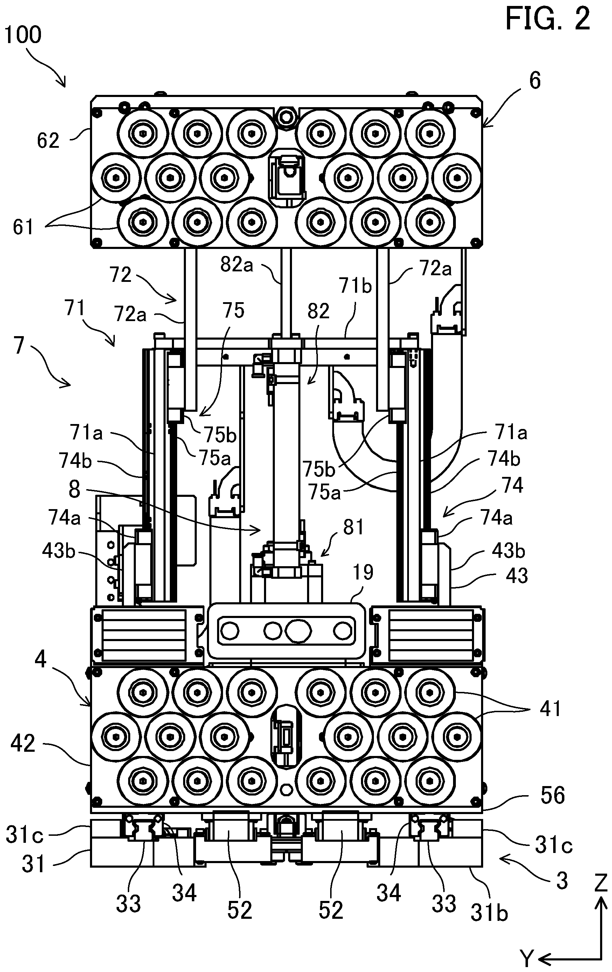

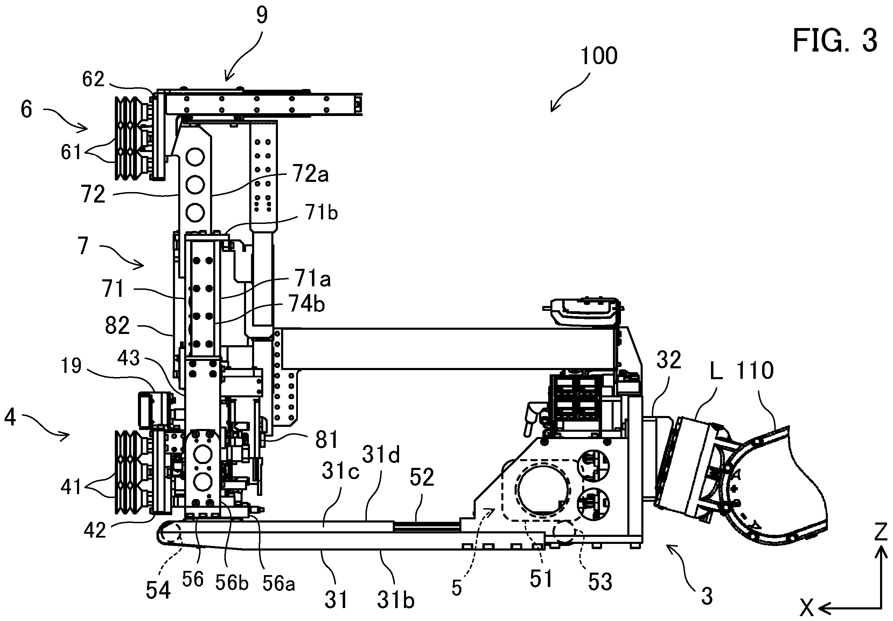

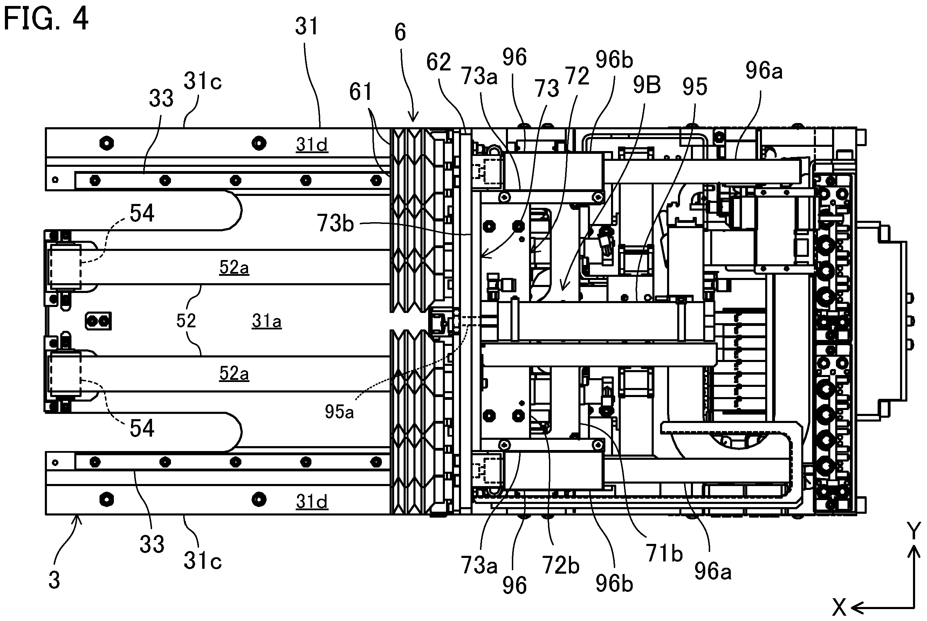

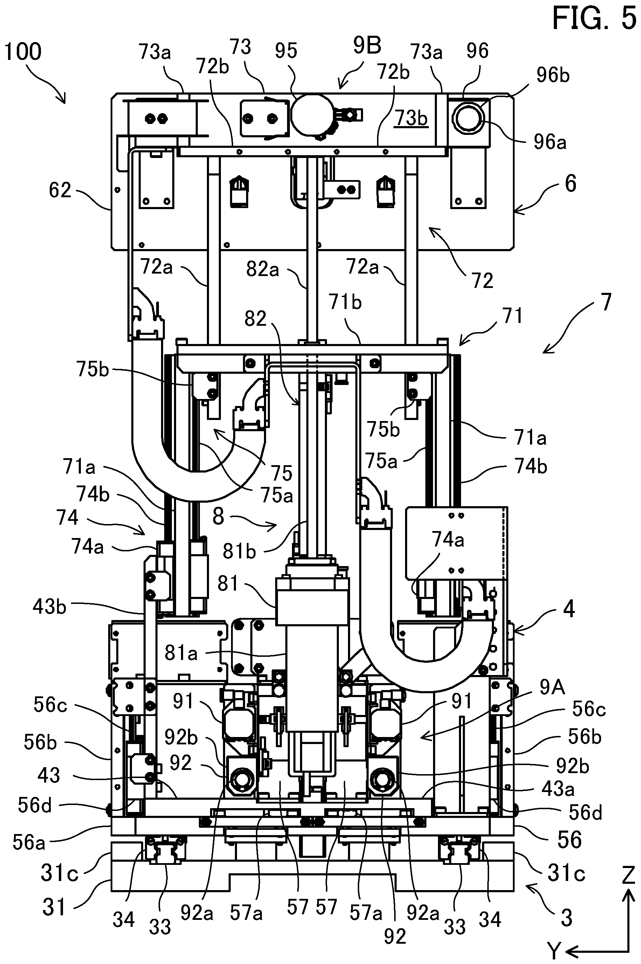

A configuration of the hand 100 will now be described in detail. FIG. 2 is a front view of the hand 100 in a state where a second holder 6 has moved upward. FIG. 3 is a side view of the hand 100 in a state where a first holder 4 and the second holder 6 are advanced and the second holder 6 has moved upward. FIG. 4 is a plan view of the hand 100 in a state where the first holder 4 and the second holder 6 are retracted. FIG. 5 is a rear view of the hand 100 in a state where the second holder 6 has moved upward. In FIG. 5, a rear portion of the hand 100 is cut. Thus, in FIG. 5, a motor 51 of a first driver 5 and other components are not shown.

The hand 100 includes a base 3, the first holder 4 that holds articles W, the second holder 6 that holds articles W, and the adjustor 9. The first holder 4 is supported to be movable in a predetermined first direction X with respect to the base 3. The second holder 6 is aligned with the first holder 4 in a predetermined second direction Z and supported to be movable in the first direction X with respect to the base 3. The first driver 5 moves the first holder 4 and the second holder 6 in the first direction X. Articles W held by the first holder 4 and the second holder 6 are placed on the base 3. The hand 100 holds the articles W by the first holder 4 and the second holder 6 and moves the first holder 4 and the second holder 6 holding the articles W in the first direction X to thereby place the articles W on the base 3.

The adjustor 9 adjusts the position of one of the first holder 4 and the second holder 6 in the first direction X independently of the other. Specifically, at least one of the first holder 4 and the second holder 6 is also moved by the adjustor 9 in the first direction X as well as being moved by the first driver 5 in the first direction X. Thus, relative positions of the first holder 4 and the second holder 6 in the first direction X are adjusted so that articles W with various shapes in various situations can be held.

The second holder 6 is designed to have its position in the second direction Z adjustable. That is, the second holder 6 is designed such that an interval between the second holder 6 and the first holder 4 in the second direction Z is adjustable. The hand 100 may further include a guide 7 that supports the second holder 6 such that the second holder 6 is movable in the second direction Z and a second driver 8 that moves the second holder 6 in the second direction Z. That is, the second holder 6 is moved by the second driver 8 in the second direction Z while being guided by the guide 7 in the second direction Z. In this manner, the relative positions of the first holder 4 and the second holder 6 in the second direction Z are adjusted.

In this example, the second direction Z is substantially orthogonal to the first direction X. Specifically, the second direction Z is the up-down direction. A direction substantially orthogonal to both the first direction X and the second direction Z is defined as a third direction Y. Each of the first direction X, the second direction Z, and the third direction Y herein refers to a direction regardless of side.

More specifically, as illustrated in FIG. 4, the base 3 includes a base plate 31 on which articles W held by the first holder 4 are placed. The base plate 31 has a substantially rectangular outer shape whose longitudinal direction extends in the first direction X and lateral direction extends in the third direction Y in a plan view. The thickness direction of the base plate 31 coincides with the second direction Z. The base plate 31 also includes two sliding plates 31c located at both ends of an upper surface 31a of the base plate 31 in the third direction Y and extending in the first direction X. Each of the sliding plates 31c has a placement surface 31d on which articles W held by the first holder 4 and the second holder 6 are placed. The placement surface 31d is oriented to the second direction Z, specifically, faces upward. The placement surface 31d has a relatively small friction coefficient and functions as a sliding surface along which the articles W slide.

As illustrated in FIG. 3, an attachment 32 to which the distal end of the robot arm 110 is attached is located at one end of the base plate 31 in the first direction X. The link L at the distal end of the robot arm 110 is attached to the attachment 32. The hand 100 can take any posture by moving the robot arm 110.

The configuration of the hand 100 will be described in a posture in which the thickness direction of the base plate 31, that is, the second direction Z, is oriented in the up-down direction for convenience of description. This posture is a posture when the hand 100 is usually used, and will be referred to as a basic posture. In the first direction X, a side of the attachment 32 will be referred to as rear, and the side opposite to the attachment 32 will be referred to as front. That is, in the first direction X, a side away from the robot arm 110 will be referred to as forward, and a side toward the robot arm 110 will be referred to as rearward.

As illustrated in FIG. 4, two rails 33 are located on the upper surface 31a of the base plate 31 and extend in the first direction X. As illustrated in FIG. 2, blocks 34 are attached to the rails 33 to be movable in the first direction X. That is, the rails 33 and the blocks 34 define a linear guide slidable in the first direction X.

The first driver 5 includes the motor 51 and transfer belts 52 that transfer a driving force of the motor 51. More specifically, the first driver 5 includes two transfer belts 52.

The motor 51 is an electric motor capable of performing bidirectional rotation. As illustrated in FIG. 3, the motor 51 is attached to the base plate 31. More specifically, the motor 51 is located on a rear end portion of the base plate 31 in the first direction X. The motor 51 is located on the base 3 without projecting from a bottom surface 31b of the base plate 31.

As illustrated in FIG. 4, each of the transfer belts 52 is wound about a corresponding pair of a driving roller 53 and a driven roller 54 located on the base plate 31. The driving roller 53 is shown in FIG. 3. The driving roller 53 and the driven roller 54 in each pair are arranged side by side in the first direction X on the base plate 31. The driving roller 53 is located on a rear end portion of the base plate 31 in the first direction X, and the driven roller 54 is located on a front end portion of the base plate 31 in the first direction X. The axis of the driving roller 53 and the axis of the driven roller 54 extend in the third direction Y. Each of the driving roller 53 and the driven roller 54 is located on the base plate 31 to be rotatable about the axis. Specifically, each of the driving roller 53 and the driven roller 54 is located in a through hole penetrating the base plate 31 in the thickness direction.

A driving force of the motor 51 is transferred to the driving roller 53 through a decelerator such as a gear train. The motor 51 is shared by two driving rollers 53.

The transfer belts 52 extend in the first direction X along the upper surface 31a of the base plate 31, are wound about the driving roller 53, and turn toward the bottom surface 31b of the base plate 31 through the through hole, extend in the first direction X along the bottom surface 31b, are wound about the driven roller 54, and turn toward the upper surface 31a of the base plate 31. Consequently, the transfer belts 52 are located on the base plate 31 and extend along the base plate 31. The two transfer belts 52 are arranged side by side in the third direction Y. The transfer belts 52 may be belts with ends or endless belts.

The first holder 4 is coupled to the transfer belts 52. Specifically, a carriage 56 is fixed to the transfer belts 52. The carriage 56 is fixed to portions of the transfer belts 52 extending along the upper surface 31a. As illustrated in FIG. 5, the carriage 56 is also fixed to the blocks 34. That is, the carriage 56 is driven by the transfer belts 52 in the first direction X and is guided by the rails 33 in the first direction X. The carriage 56 is immovable in the second direction Z and the third direction Y. The carriage 56 supports the first holder 4.

As illustrated in FIG. 3, the first holder 4 includes the suction pads 41, and a back plate 42 supporting the suction pads 41. The first holder 4 is supported by a base frame 43.

The back plate 42 is a substantially rectangular plate. The thickness direction of the back plate 42 is oriented to the first direction X.

The suction pads 41 are hollow pads having an accordion shape. The suction pads 41 are deformable. The suction pads 41 are attached to a surface of the back plate 42 facing forward. As illustrated in FIG. 2, the suction pads 41 are arranged in columns and rows on the back plate 42. Each of the suction pads 41 has an opening facing forward.

The suction pads 41 are connected to the negative pressure generator 17 through tubes. When the negative pressure generator 17 generates a negative pressure, an object that approaches or contacts the openings of the suction pads 41 are thereby sucked. The suction pads 41 can be connected to the negative pressure generator 17 through a common tube system or tube systems independent of each other. In the case where the suction pads 41 are connected to the negative pressure generator 17 through the independent tube systems, the suction pads 41 can perform suction individually or in units of groups.

As illustrated in FIG. 5, the base frame 43 includes a bottom plate 43a and a pair of support plates 43b located on the bottom plate 43a. FIG. 5 shows only one of the support plates 43b. The bottom plate 43a extends in the third direction Y with the thickness direction thereof oriented to the second direction Z. The pair of support plates 43b is located at both ends of the bottom plate 43a in the third direction Y. The pair of support plates 43b extends in the second direction Z with the thickness direction thereof oriented to the third direction Y.

The carriage 56 supports the thus-configured first holder 4 such that the first holder 4 is movable in the second direction Z and immovable in the first direction X and the third direction Y.

Specifically, as illustrated in FIG. 5, the carriage 56 includes a bottom plate 56a, a pair of support plates 56b located on the bottom plate 56a, a pair of rails 56c fixed to the pair of support walls 56b, and a pair of blocks 56d connected to the pair of rails 56c to be slidable in the second direction Z.

The bottom plate 56a extends in the third direction Y with the thickness direction thereof oriented to the second direction Z. The pair of support plates 56b is located at both ends of the bottom plate 56a in the third direction Y. The bottom plate 56a is located below the bottom plate 43a of the base frame 43. The pair of support plates 56b is arranged side by side with an interval in the third direction Y with the thickness direction thereof oriented to the third direction Y. Each of the support plates 56b extends in the second direction Z, that is, in the up-down direction. The pair of support plates 56b is located outside the pair of support plates 43b of the base frame 43 in the third direction Y.

Each of the rails 56c is fixed to a corresponding one of the support plates 56b. The rails 56c extend in the second direction Z. The rails 56c and the blocks 56d define a linear guide slidable in the second direction Z. The pair of rails 56c and the pair of blocks 56d are located inside the pair of support plates 56b and outside the pair of support plates 43b of the base frame 43 in the third direction Y.

The pair of blocks 56d is fixed to the pair of support plates 43b. Accordingly, the pair of support plates 43b, that is, the base frame 43, is movable along the rails 56c in the second direction Z. Since the base frame 43 supports the first holder 4, the first holder 4 is also movable in the second direction Z.

As illustrated in FIG. 5, elevators 57 that move the first holder 4 in the second direction Z, that is, in the up-down direction, are disposed to the base frame 43 and the carriage 56. Specifically, two elevators 57 arranged side by side in the third direction Y are located on the base frame 43 and the carriage 56. The elevators 57 are air cylinders. Each of the elevators 57 includes a piston rod 57a. The piston rod 57a extends in the second direction Z. The elevators 57 move the piston rods 57a in the second direction Z. The elevators 57 are fixed to the bottom plate 43a of the base frame 43. The piston rods 57a extend downward from the bottom plate 43a and are fixed to the bottom plate 56a of the carriage 56.

The air supplier 18 is connected to the elevators 57 through an air tube. The air tube includes a solenoid valve that switches an air supply state to the elevators 57. The elevators 57 selectively move the piston rod 57a between a first position at which the piston rod 57a is retracted and a second position at which the piston rod 57a is advanced by switching the air supply state. The first position is a position at which the support base 43 is closest to the bottom wall 56a, and in this state, the position of the first holder 4 is the lowest position in the second direction Z. The second position is a position at which the base frame 43 is farthest from the bottom plate 56a, and in this state, the position of the first holder 4 is the highest position in the second direction Z.

In the manner described above, the first holder 4 is supported by the carriage 56 to be movable in the second direction Z and moved by the elevators 57 in the second direction Z. The elevators 57 are used to assist drawing of articles W held by the first holder 4 or the second holder 6 onto the base plate 31, which will be described in detail later.

As illustrated in FIG. 2, the second holder 6 is attached to the base frame 43 through the guide 7. Since the base frame 43 is supported by the carriage 56, the second holder 6 is consequently attached to the carriage 56. The second holder 6 includes the suction pads 61 and a back plate 62 supporting the suction pads 61. The back plate 62 is located with the thickness direction thereof oriented to the first direction X.

The suction pads 61 are hollow pads having an accordion shape. The suction pads 61 are deformable. The suction pads 61 are attached to a surface of the back plate 62 facing forward. The suction pads 61 are arranged in columns and rows on the back plate 62. Each of the suction pads 61 has an opening facing forward.

The suction pads 61 are connected to the negative pressure generator 17 through tubes. When the negative pressure generator 17 generates a negative pressure, an article that approaches or contacts the openings of the suction pads 61 is thereby sucked. The suction pads 61 can be connected to the negative pressure generator 17 through a common tube system or tube systems independent of each other. In a case where the suction pads 61 are connected to the negative pressure generator 17 through the independent tube systems, the suction pads 61 can perform suction individually or in units of groups.

The first driver 5 moves the carriage 56 in the first direction X by moving the transfer belts 52 by the motor 51. Accordingly, the first driver 5 moves the first holder 4 in the first direction X. Since the second holder 6 is also attached to the carriage 56 through the guide 7, the first driver 5 moves both the first holder 4 and the second holder 6 in the first direction X. The first driver 5 moves the first holder 4 and the second holder 6 between a predetermined first position and a second position located rearward of the first position in the first direction X. As illustrated in FIG. 3, the first position is a position at which the suction pads 41 of the first holder 4 and the suction pads 61 of the second holder 6 project forward of the front end of the base plate 31 in the first direction X. The first position is a position at which the first holder 4 and the second holder 6 perform suction of articles W. As illustrated in FIG. 4, the second position is a position at which the suction pads 41 and the suction pads 61 are retracted rearward from the front end of the base plate 31 in the first direction X. The second position is a position at which the articles W held by the first holder 4 and the second holder 6 are placed on the base plate 31.

As illustrated in FIG. 4, each of the transfer belts 52 has a conveyance surface 52a on which the articles W held by the first holder 4 are placed. The conveyance surface 52a is an outer peripheral surface of the transfer belt 52. Specifically, while the first holder 4 is located at the second position, a portion of the transfer belts 52 is exposed at the upper surface 31a of the base plate 31 at a position forward of the first holder 4. The outer peripheral surface of the portion of each of the transfer belts 52 located forward of the first holder 4 on the upper surface 31a of the base plate 31 is the conveyance surface 52a. That is, each transfer belt 52 moves the conveyance surface 52a together with the first holder 4. The position of the conveyance surface 52a in the second direction Z, that is, the height in the up-down direction, is substantially the same as that of the placement surface 31d. The conveyance surface 52a has a friction coefficient larger than a friction coefficient of the placement surface 31d.

As illustrated in FIG. 2, the guide 7 includes a first mover 71, a first guide 74 that supports the first mover 71 such that the first mover 71 is movable in the second direction Z with respect to the base 3, a second mover 72 on which the second holder 6 is mounted, and a second guide 75 that supports the second mover 72 such that the second mover 72 is movable in the second direction Z with respect to the first mover 71. The second mover 72 supports the second holder 6. The second mover 72 is located above the first mover 71. The guide 7 is a linear guide and linearly guides the second holder 6 in the second direction Z.

The first guide 74 includes a pair of blocks 74a fixed to the base frame 43, and rails 74b coupled to the blocks 74a to be slidable in the second direction Z.

The pair of blocks 74a is located inside the pair of support plates 43b of the base frame 43 in the third direction Y. Each of the blocks 74a is fixed to the upper end of a corresponding one of the support plates 43b. The two rails 74b are also located inside the pair of support plates 43b in the third direction Y. The rails 74b extend in the second direction Z. The blocks 74a and the rails 74b define a linear guide slidable in the second direction Z. In this example, since the blocks 74a are fixed to the support plates 43b, the rails 74b move in the second direction Z with respect to the support plates 43b.

The first mover 71 includes a pair of support plates 71a and a coupling plate 71b coupling the pair of support plates 71a to each other.

The pair of support plates 71a is arranged side by side with an interval in the third direction Y with the thickness direction thereof oriented to the third direction Y. The pair of support plates 71a is located inside the two rails 74b in the third direction Y. Each of the support plates 71a extends in the second direction Z, that is, in the up-down direction. Each of the support plates 71a is fixed to a corresponding one of the rails 74b. The coupling plate 71b is fixed to the upper ends of the pair of support plates 71a. Since the pair of support plates 71a is fixed to the two rails 74b, the first mover 71 moves in the second direction Z together with the rails 74b as the rails 74b move in the second direction Z.

The second guide 75 includes a pair of rails 75a fixed to the pair of support plates 71a of the first mover 71 and a pair of blocks 75b coupled to the pair of rails 75a to be slidable in the second direction Z.

The pair of rails 75a is arranged side by side with an interval in the third direction Y. The pair of rails 75a is located inside the pair of support plates 71a in the third direction Y. Each of the rails 75a extends in the second direction Z, that is, in the up-down direction. Each of the rails 75a is fixed to a corresponding one of the support plates 71a. The pair of blocks 75b is also located inside the pair of support plates 71a in the third direction Y. The rails 75a and the blocks 75b define a linear guide slidable in the second direction Z. Since the rails 75a are fixed to the support plates 71a, the blocks 75b move in the second direction Z with respect to the support plates 71a.

As illustrated in FIG. 5, the second mover 72 includes a pair of support plates 72a and a coupling plate 72b coupling the pair of support plates 72a to each other. The second mover 72 supports the second holder 6.

The pair of support plates 72a is arranged side by side with an interval in the third direction Y with the thickness direction thereof oriented to the third direction Y. The pair of support plates 72a is located inside the pair of blocks 75b in the third direction Y. Each of the support plates 72a extends in the second direction Z, that is, in the up-down direction. Each of the support plates 72a is fixed to a corresponding one of the blocks 75b. The lower ends of the support plates 72a are fixed to the blocks 75b. The coupling plate 72b is fixed to the upper ends of the pair of support plates 72a. Since the pair of support plates 72a is fixed to the two blocks 75b, the second mover 72 moves together with the blocks 75b in the second direction Z as the blocks 75b move in the second direction Z.

In this example, the coupling plate 71b of the first mover 71 is displaced from the pair of support plates 71a in the first direction X to avoid interference with the support plates 72a of the second mover 72.

As illustrated in FIG. 5, the second driver 8 includes an adjustable driver 81 capable of adjusting the amount of movement of the second holder 6, and a fixed driver 82 that moves the second holder 6 with a constant amount. In FIG. 5, the adjustable driver 81 the fixed driver 82 overlap each other in the depth direction of the drawing sheet. The adjustable driver 81 drives the first mover 71. The fixed driver 82 drive the second mover 72.

The adjustable driver 81 is a linear actuator. For example, the adjustable driver 81 is an electric cylinder. Specifically, the adjustable driver 81 includes a motor 81a and a rod 81b. The rod 81b extends in the second direction Z. The rod 81b includes a ball screw mechanism that is rotationally driven by the motor 81a. When the motor 81a operates, the rod 81b thereby moves in the second direction Z. The motor 81a of the adjustable driver 81 is fixed to the base frame 43. The rod 81b is fixed to the coupling plate 71b of the first mover 71. The adjustable driver 81 moves the first mover 71 in the second direction Z by operating the motor 81a.

The adjustable driver 81 continuously adjusts the position, that is, the advance amount, of the rod 81b in the second direction Z within a predetermined adjustable range by adjusting the rotation amount of the motor 81a. That is, the adjustable driver 81 adjusts the amount of movement of the first mover 71 in the second direction Z within the adjustable range by adjusting the rotation amount of the motor 81a.

The fixed driver 82 is a linear actuator. For example, the fixed driver 82 is an air cylinder. The fixed driver 82 includes a piston rod 82a. The piston rod 82a extends in the second direction Z. The fixed driver 82 moves the piston rod 82a in the second direction Z. The fixed driver 82 is fixed to the coupling plate 71b of the first mover 71. The piston rod 82a is fixed to the coupling plate 72b of the second mover 72. In terms of a position in the first direction X, the fixed driver 82 is located forward of the adjustable driver 81.

The air supplier 18 is connected to the fixed driver 82 through an air tube. The air tube includes a solenoid valve that switches an air supply state to the fixed driver 82. The fixed driver 82 selectively moves the piston rod 82a between a first position at which the piston rod 82a is retracted and a second position at which the piston rod 82a is advanced by switching the air supply state. The fixed driver 82 moves the second mover 72 in the second direction Z with respect to the first mover 71 by advancing or retracting the piston rod 82a between the first position and the second position. The amount of movement of the piston rod 82a is fixed. For example, the amount of movement of the second mover 72 by the fixed driver 82 is less than or equal to the maximum amount of movement of the first mover 71 by the adjustable driver 81.

The second driver 8 moves the second holder 6 in the second direction Z by the adjustable driver 81 and the fixed driver 82. The second driver 8 causes the adjustable driver 81 and the fixed driver 82 to operate independently of each other.

Specifically, the second driver 8 moves the first mover 71 in the second direction Z by adjusting the advance amount of the rod 81b of the adjustable driver 81. The second mover 72 is supported by the first mover 71, and the second holder 6 is supported by the second mover 72. Accordingly, when the first mover 71 moves in the second direction Z, the second mover 72 and the second holder 6 move in the second direction Z together with the first mover 71. The second driver 8 can arbitrarily adjust the amount of movement of the first mover 71, and accordingly, the amount of movement of the second holder 6, in the second direction Z within an adjustable range of the advance amount of the rod 81b.

The second driver 8 moves the second mover 72 in the second direction Z by changing the advance amount of the piston rod 82a of the fixed driver 82. The second driver 8 selectively switches the position of the piston rod 82a of the fixed driver 82 between a first position and a second position. While the piston rod 82a is located at the first position, the second mover 72 is closest to the first mover 71 in the second direction Z. On the other hand, while the piston rod 82a is located at the second position, the second mover 72 is farthest from the first mover 71 in the second direction Z. When the second mover 72 moves in the second direction Z, the second holder 6 moves in the second direction Z together with the second mover 72. The second driver 8 moves the second mover 72, and accordingly, the second holder 6, in the second direction Z by a constant distance by switching the position of the piston rod 82a between the first position and the second position.

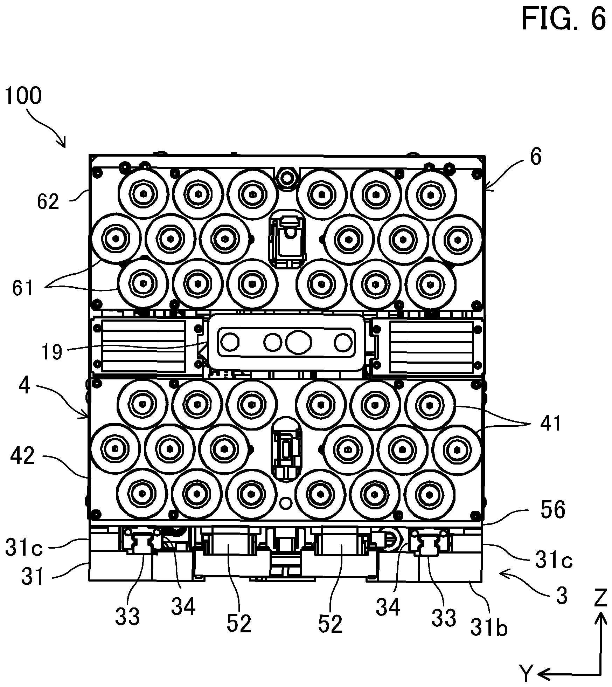

FIG. 6 is a front view of the hand 100 in a state where the second holder 6 has moved downward. In a case where the advance amount of the rod 81b of the adjustable driver 81 is at minimum and the piston rod 82a of the fixed driver 82 is at the first position, as illustrated in FIG. 6, a distance from the first holder 4 to the second holder 6 in the second direction Z is a minimum distance. In this example, the distance from the first holder 4 to the second holder 6 in the second direction Z is defined as a distance in the second direction Z between a centroid of a front shape of the first holder 4 and a centroid of a front shape of the second holder 6. In a case where the advance amount of the rod 81b of the adjustable driver 81 is at maximum and the piston rod 82a of the fixed driver 82 is at the second position, as illustrated in FIG. 2, a distance from the first holder 4 to the second holder 6 in the second direction Z is a maximum distance. The second driver 8 arbitrarily adjusts the distance from the first holder 4 to the second holder 6 in the second direction Z between the minimum distance and the maximum distance by appropriately combining adjustment of the amount of movement by the adjustable driver 81 and switching of the amount of movement by the fixed driver 82.

Since the amount of movement by the fixed driver 82 is less than or equal to the maximum amount of movement by the adjustable driver 81, the distance from the first holder 4 to the second holder 6 in the second direction Z can be adjusted in the entire range between the minimum distance and the maximum distance.

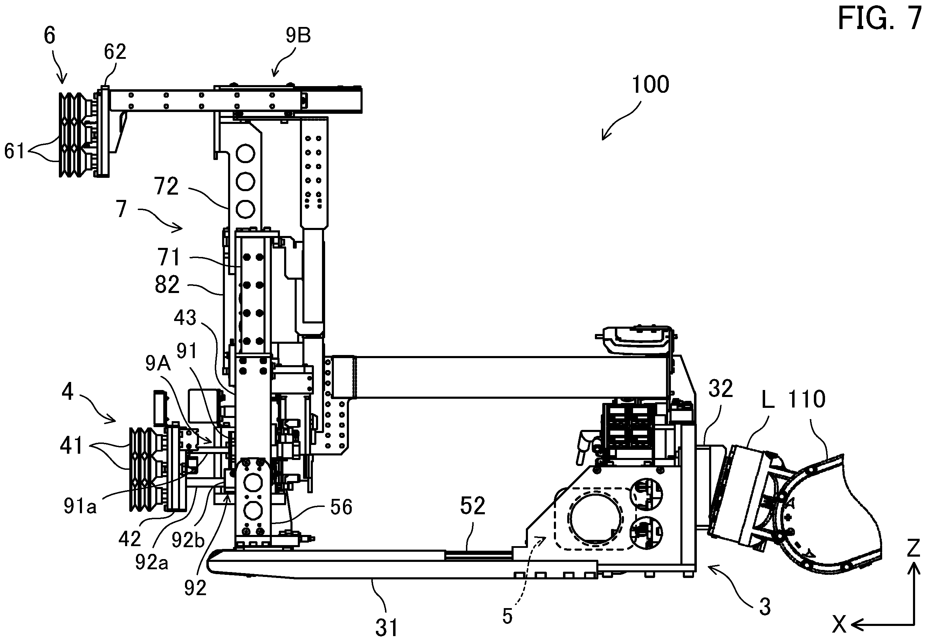

FIG. 7 is a side view of the hand 100 in a state where the first holder 4 and the second holder 6 are advanced in a first direction X. In FIG. 7, the first holder 4 and the second holder 6 are advanced by the first driver 5 in the first direction X, and the second holder 6 have moved upward in the second direction Z. The adjustor 9 includes a first adjustor 9A that adjusts a position of the first holder 4 in the first direction X independently of the second holder 6, and a second adjustor 9B that adjusts a position of the second holder 6 in the first direction X independently of the first holder 4.

The first adjustor 9A includes first drivers 91. In this example, as illustrated in FIG. 5, the first adjustor 9A includes two first drivers 91. The two first drivers 91 are arranged side by side in the third direction Y. The first drivers 91 are fixed to the base frame 43. The first drivers 91 are linear actuators. For example, the first drivers 91 are air cylinders. As illustrated in FIG. 7, each of the first drivers 91 includes a piston rod 91a. The piston rod 91a extends in the first direction X. Each of the first drivers 91 moves the piston rod 91a in the first direction X. The piston rod 91a is fixed to the back plate 42 of the first holder 4.

As illustrated in FIG. 5, the first adjustor 9A further includes linear guides 92 that guide the first holder 4 in the first direction X. In this example, the first adjustor 9A includes two linear guides 92. The two linear guides 92 are arranged side by side in the third direction Y. The linear guides 92 support the first holder 4 such that the first holder 4 is movable in the first direction X with respect to the base frame 43. Each of the linear guides 92 includes a shaft 92a and an outer cylinder 92b. As illustrated in FIG. 7, the shaft 92a extends in the first direction X. The shaft 92a is slidably inserted into the outer cylinder 92b. The front end of the shaft 92a is fixed to the back plate 42 of the first holder 4. The outer cylinder 92b is fixed to the base frame 43. That is, the outer cylinder 92b supports the shaft 92a such that the shaft 92a is slidable in the first direction X. When the shaft 92a moves in the first direction X, the first holder 4 moves in the first direction X together with the shaft 92a.

When the first drivers 91 moves the first holder 4 in the first direction X, the linear guides 92 guide the first holder 4 in the first direction X. The first holder 4 is stably moved in the first direction X by the linear guides 92.

The air supplier 18 is connected to the first drivers 91 through air tubes. Each of the air tubes includes a solenoid valve that switches an air supply state to the first drivers 91. Each of the first drivers 91 selectively moves the piston rod 91a between a first position at which the piston rod 91a is retracted and a second position at which the piston rod 91a is advanced by switching the air supply state. Each first driver 91 advances or retracts the piston rod 91a between the first position and the second position to thereby adjust the position of the first holder 4 in the first direction X. When the piston rod 91a is located at the first position, the first holder 4 is closest to the base frame 43 in the first direction X, as illustrated in FIG. 3. That is, the first holder 4 is most retracted in the first direction X. This position will be referred to as a normal position of the first holder 4. When the piston rod 91a is located at the second position, the first holder 4 is farthest from the base frame 43 in the first direction X, as illustrated in FIG. 7. That is, the first holder 4 is most advanced in the first direction X. This position will be referred to as an advanced position of the first holder 4.

As illustrated in FIG. 4, the second adjustor 9B includes a second driver 95. In this example, the second adjustor 9B includes one second driver 95. The second driver 95 is fixed to the second mover 72.

Specifically, an attachment frame 73 is fixed to the second mover 72. The attachment frame 73 includes a pair of side plates 73a and a front plate 73b coupling the pair of side plates 73a to each other. The pair of side plates 73a is arranged side by side with an interval in the third direction Y with the thickness direction thereof oriented to the third direction Y. The pair of side plates 73a is located at both ends of the coupling plate 72b of the second mover 72 in the third direction Y and fixed to the coupling plate 72b. Each of the side plates 73a extends in the first direction X, that is, in the front-rear direction. The front plate 73b is fixed to the front ends of the pair of side plates 73a and the coupling plate 72b.

The second driver 95 is fixed to the front plate 73b of the attachment frame 73. The second driver 95 is located substantially at a center of the front plate 73b in the third direction Y. The second driver 95 is a linear actuator. For example, the second driver 95 is an air cylinder. The second driver 95 includes a piston rod 95a. The piston rod 95a extends in the first direction X through the front plate 73b. The second driver 95 moves the piston rod 95a in the first direction X. The front end of the piston rod 95a is fixed to the back plate 62 of the second holder 6.

The second adjustor 9B further includes linear guides 96 that guide the second holder 6 in the first direction X. In this example, the second adjustor 9B includes two linear guides 96. The two linear guides 96 are arranged side by side in the third direction Y. The linear guides 96 support the second holder 6 such that the second holder 6 is movable with respect to the second mover 72 in the first direction X. Each of the linear guides 96 includes a shaft 96a and an outer cylinder 96b. The shaft 96a extends in the first direction X. The shaft 96a is slidably inserted into the outer cylinder 96b. The front end of the shaft 96a is fixed to the back plate 62 of the second holder 6. The outer cylinder 96b is fixed to a corresponding one of the side plates 73a of the attachment frame 73. That is, the outer cylinder 96b supports the shaft 96a such that the shaft 96a is slidable in the first direction X. When the shaft 96a moves in the first direction X, the second holder 6 moves in the first direction X together with the shaft 96a.

When the second driver 95 moves the second holder 6 in the first direction X, the linear guides 96 guide the second holder 6 in the first direction X. The second holder 6 is stably moved in the first direction X by the linear guides 96.

The air supplier 18 is connected to the second driver 95 through an air tube. The air tube includes a solenoid valve that switches an air supply state to the second driver 95. The second drivers 95 selectively moves the piston rod 95a between a first position at which the piston rod 95a is retracted and a second position at which the piston rod 95a is advanced by switching the air supply state. The second driver 95 advances or retracts the piston rod 95a between the first position and the second position to thereby adjust the position of the second holder 6 in the first direction X. When the piston rod 95a is located at the first position, the second holder 6 is closest to the second mover 72 in the first direction X, as illustrated in FIG. 3. That is, the second holder 6 is most retracted in the first direction X. This position will be referred to as a normal position of the second holder 6. When the piston rod 95a is located at the second position, the second holder 6 is farthest from the second mover 72 in the first direction X, as illustrated in FIG. 7. That is, the second holder 6 is most advanced in the first direction X. This position will be referred to as an advanced position of the second holder 6.

A maximum adjustment amount of the position of the first holder 4 in the first direction X by the first adjustor 9A is different from a maximum adjustment amount of the position of the second holder 6 in the first direction X by the second adjustor 9B. In this example, a maximum advance amount of the piston rod 95a of the second driver 95 is larger than a maximum advance amount of the piston rod 91a of the first drivers 91.

In addition, as illustrated in FIG. 7, a position of the first holder 4 in the first direction X when the first holder 4 is most advanced from the base 3 by adjustment by the first adjustor 9A is different from a position of the second holder 6 in the first direction X when the second holder 6 is most advanced from the base 3 in the first direction X by adjustment by the second adjustor 9B. That is, the position of the first holder 4 in the first direction X at the advanced position is different from the position of the second holder 6 in the first direction X at the advanced position. In this example, the second holder 6 at the advanced position is located forward of the first holder 4 at the advanced position in the first direction X.

Further, as illustrated in FIG. 3, a position of the first holder 4 in the first direction X when the first holder 4 is most retracted in the first direction X by adjustment by the first adjustor 9A is substantially the same as a position of the second holder 6 in the first direction X when the second holder 6 is most retracted in the first direction X by adjustment by the second adjustor 9B. That is, the position of the first holder 4 at the normal position in the first direction X is substantially the same as the position of the second holder 6 at the normal position in the first direction X.

As illustrated in FIG. 2, the hand 100 further includes an imager 19. The imager 19 is attached to the base frame 43. The imager 19 is located between the first holder 4 and the second holder 6 in the second direction Z. The imager 19 is, for example, a stereo camera. The imager 19 generally faces forward in the first direction X. The imager 19 may be a monocular camera, a time-of-flight (TOF) camera, or a camera of another type.

Tubes connected to the first holder 4, tubes connected to the second holder 6, wires connected to the adjustable driver 81, wires connected to the fixed driver 82, tubes connected to the adjustor 9, and tubes connected to the imager 19 are housed in an accommodation duct at least in the hand 100. The accommodation duct is freely bendable, and accommodates tubes and wires. The accommodation duct may accommodate tubes and wires other than the tubes and the wires described above. For example, the tubes and the wires described above are laid out along the robot arm 110, and connected to the corresponding devices such as the controller 2, the negative pressure generator 17, or the air supplier 18. In the hand 100, the tubes connected to the first holder 4, the tubes connected to the second holder 6, the wires connected to the adjustable driver 81, the tubes connected to the fixed driver 82, and the tubes connected to the adjustor 9 are arranged on the base 3 without projecting from the bottom surface 31b. That is, the accommodation duct is located on the base 3 without projecting from the bottom surface 31b.

The controller 2 causes the robot 1 to transfer articles W. The controller 2 controls the robot 1 to move the carrier 15, the robot arm 110, and the hand 100, and causes the hand 100 to hold articles W. The controller 2 causes the carrier 15 and the robot arm 110 to move the hand 100 holding the articles W to transfer the articles W to a target position.

FIG. 8 illustrates a schematic hardware configuration of the controller 2. The controller 2 controls the servo motor 14, the first driver 5, the elevators 57, the second driver 8, the adjustor 9, the carrier 15, the negative pressure generator 17, the air supplier 18, and the imager 19. The controller 2 includes a processor 21, a storage 22, a memory 23, and a servo amplifier 24.

The processor 21 controls the entire controller 2. The processor 21 performs various computations. For example, the processor 21 is a processor such as a central processing unit (CPU). The processor 21 may be a micro controller unit (MCU), a micro processor unit (MPU), a field programmable gate array (FPGA), a programmable logic controller (PLC), or the like.

The storage 22 stores programs and various types of data to be executed by the processor 21. The storage 22 is a nonvolatile memory, a hard disc drive (HDD), or a solid state drive (SSD), for example. The memory 23 temporarily stores data or other information. For example, the memory 23 is a volatile memory.

The servo amplifier 24 receives an instruction from the processor 21 and supplies a current to the servo motor 14. The servo amplifier 24 receives a detection result of an encoder 14a included in the servo motor 14. Based on the detection result of the encoder 14a, the servo amplifier 24 performs feedback control on a current applied to the servo motor 14.

FIG. 9 is a functional block diagram of the processor 21. The processor 21 reads control programs from the storage 22 and develops the programs to the memory to thereby perform various functions. Specifically, the processor 21 includes a travel controller 25, an arm controller 26, an imaging controller 27, an image processor 28, an elevation controller 29, an adjustment controller 210, a belt controller 211, and a suction controller 212.

The travel controller 25 controls the carrier 15. The travel controller 25 controls rotation of the motor of the carrier 15 to thereby move the carrier 15, and accordingly, the robot 1, to a desired position.

The arm controller 26 controls an action of the robot arm 110 such that the hand 100 moves to a position suitable for a purpose such as imaging of articles W, holding of the articles W, or carriage of the articles W. The arm controller 26 also performs an action such as selection of an article W to be held from the articles W. The arm controller 26 generates an angle of each joint 13 in accordance with a target action of the robot arm 110 as an instruction angle, and outputs the generated instruction angle to the servo amplifier 24.

The imaging controller 27 controls the imager 19 and causes the imager 19 to perform imaging.

The image processor 28 processes an image captured by the imager 19 to determine an outer shape, a position, a posture, or other features of the article W. Specifically, the image processor 28 compares the captured image with a template of articles W stored in the storage 22, and extracts articles W in the captured image by a technique such as pattern matching. The image processor 28 outputs an outer shape, a position, a posture, or other features of the extracted article W to the arm controller 26 and the elevation controller 29. The arm controller 26 and the elevation controller 29 use the position, the posture, or other features of the extracted article W in control thereof.

The elevation controller 29 controls the second driver 8 and the elevator 57 of the hand 100. Specifically, in adjusting the distance from the first holder 4 to the second holder 6 in the second direction Z, the elevation controller 29 controls the second driver 8. On the other hand, in moving the entire first holder 4 or second holder 6 in the second direction Z, the elevation controller 29 controls the elevator 57.

The adjustment controller 210 controls the first adjustor 9A and the second adjustor 9B of the hand 100. Specifically, in adjusting the position of the first holder 4 in the first direction X, the adjustment controller 210 controls the first adjustor 9A. In adjusting the position of the second holder 6 in the first direction X, the adjustment controller 210 controls the second adjustor 9B.

The belt controller 211 controls the first driver 5 of the hand 100. Specifically, the belt controller 211 controls the rotation direction and the rotation amount of the motor 51 of the first driver 5 to thereby adjust the positions of the first holder 4 and the second holder 6 in the first direction X.

The suction controller 212 controls operation of the first holder 4 and the second holder 6. Specifically, the suction controller 212 switches the negative pressure generator 17 between operation and stop, and also switches the connection between the negative pressure generator 17 and either the first holder 4 or the second holder 6 between connection and blocking. In this manner, the suction controller 212 switches the first holder 4 and the second holder 6 between suction and cancellation of suction.

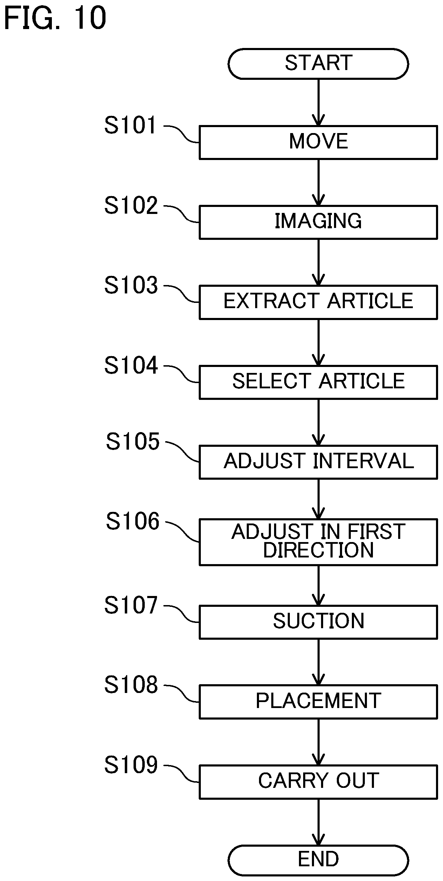

Next, transfer of articles W by the robot system S will be described specifically. FIG. 10 is a flowchart of transfer of articles W. Description here is directed to an example case where articles W stacked at a predetermined start position are transferred to a predetermined target position.

First, in step S101, the travel controller 25 controls the carrier 15 to move the robot 1 to a start position.

Then, in step S102, the arm controller 26 moves the robot arm 110 to move the imager 19 to a predetermined imaging position, and the imaging controller 27 causes the imager 19 to perform imaging. In this manner, the imager 19 acquires an image of the stacked articles W.

Thereafter, in step S103, the image processor 28 extracts an outer shape, a position, and a posture of the articles W from the captured image.

Subsequently, in step S104, the arm controller 26 selects an article W to be held by the hand 100 from the articles W, based on an extraction result of the image processor 28. For example, when it is assumed that the hand 100 holds two articles W stacked one above the other at a time, the arm controller 26 selects an uppermost article W and an article W immediately under the uppermost article W as two articles W to be held, from the articles W.

In step S105, the elevation controller 29 determines a distance from the first holder 4 to the second holder 6 in the second direction Z (hereinafter referred to as a "target distance"). The elevation controller 29 determines the target distance based on the sizes, positions, and others of the selected two articles W. For example, the elevation controller 29 obtains a distance between centroids of front shapes of the two articles W in the second direction Z, and uses the obtained distance as the target distance.

The elevation controller 29 determines a combination of the second driver 8 for achieving the target distance. Specifically, in a case where the target distance is encompassed in a range obtained by adding an adjustable distance of the adjustable driver 81 to the minimum distance from the first holder 4 to the second holder 6, the elevation controller 29 locates the piston rod 82b of the fixed driver 82 at the first position. In this state, the elevation controller 29 adjusts the advance amount of the rod 81b of the adjustable driver 81 so that the distance from the first holder 4 to the second holder 6 thereby coincides with the target distance. In a case where the target distance is included in a range obtained by adding a movement distance of the fixed driver 82 and an adjustable distance of the adjustable driver 81 to the minimum distance from the first holder 4 to the second holder 6, the elevation controller 29 locates the piston rod 82a of the fixed driver 82 at the second position. In this state, the elevation controller 29 adjusts the advance amount of the rod 81b of the adjustable driver 81 so that the distance from the first holder 4 to the second holder 6 thereby coincides with the target distance.

In step S106, the adjustment controller 210 determines a target adjustment amount of the positions of the first holder 4 and the second holder 6 in the first direction X. The adjustment controller 210 determines the target adjustment amount based on positions of holding target surfaces of the selected two articles W in the first direction X. The holding target surface refers to a surface of the article W to contact with the first holder 4 or the second holder 6, specifically, a surface facing the hand 100. For example, the adjustment controller 210 obtains a difference between the holding target surfaces of the two articles W in the first direction X, and sets the obtained difference as a target adjustment amount.

The adjustment controller 210 determines operating states of the first adjustor 9A and the second adjustor 9B for achieving the target adjustment amount. Specifically, the state of the first adjustor 9A and the second adjustor 9B can be a state where the first adjustor 9A has retracted the first holder 4 and the second adjustor 9B has retracted the second holder 6, a state where the first adjustor 9A has retracted the first holder 4 and the second adjustor 9B has advanced the second holder 6, a state where the first adjustor 9A has advanced the first holder 4 and the second adjustor 9B has retracted the second holder 6, or a state where the first adjustor 9A has advanced the first holder 4 and the second adjustor 9B has advanced the second holder 6. In these states, the positions of the first holder 4 and the second holder 6 in the first direction X are different. Specifically, when the first holder 4 and the second holder 6 are in the retracted state, the positions of the first holder 4 and the second holder 6 in the first direction X are substantially the same. When the first holder 4 is in the advanced state and the second holder 6 is in the retracted state, the first holder 4 is located forward of the second holder 6 in the first direction X. When the first holder 4 is in the retracted state and the second holder 6 is in the advanced state, the second holder 6 is located forward of the first holder 4 in the first direction X. When both the first holder 4 and the second holder 6 are in the advanced state, the second holder 6 is located forward of the first holder 4 in the first direction X. When both the first holder 4 and the second holder 6 are in the advanced state, the positional difference between the first holder 4 and the second holder 6 in the first direction X is smaller than that when the first holder 4 is in the retracted state and the second holder 6 is in the advanced state. When only the second holder 6 is in the advanced state, the distance between the first holder 4 and the second holder 6 in the first direction X is larger than that when only the first holder 4 is in the advanced state. The adjustment controller 210 determines a combination of the operating states of the first adjustor 9A and the second adjustor 9B corresponding to the target adjustment amount. In accordance with the determination, the adjustment controller 210 controls the first adjustor 9A and the second adjustor 9B.

Thereafter, in step S107, the belt controller 211 operates the motor 51 of the first driver 5 to advance the first holder 4 and the second holder 6 to the first position. Accordingly, the suction pads 41 of the first holder 4 and the suction pads 61 of the second holder 6 project forward from the front end of the base plate 31. In addition, the arm controller 26 brings each of the first holder 4 and the second holder 6 into contact with sides of the selected two articles W. Specifically, the arm controller 26 moves the robot arm 110 such that the base plate 31 is located at a height substantially the same as or below the bottom of a lower one of the two articles W. At this height, the arm controller 26 brings the suction pads 41 and the suction pads 61 into contact with sides of the corresponding articles W. At this time, the suction controller 212 operates the negative pressure generator 17 and connects the negative pressure generator 17 to the first holder 4 and the second holder 6. Accordingly, the first holder 4 and the second holder 6 start suction. In this manner, the first holder 4 and the second holder 6 adhere to the two articles W.

Subsequently, in step S108, the belt controller 211 operates the motor 51 of the first driver 5 to retract the first holder 4 and the second holder 6 to the second position. Accordingly, the articles W held by the first holder 4 and the second holder 6 are drawn toward the base plate 31 in the first direction X. The articles W drawn in the first direction X, specifically the lower one of the vertically stacked two articles W, is placed on the conveyance surfaces 52a of the transfer belts 52. Since the articles W are placed on the conveyance surfaces 52a, the articles W are also conveyed by the transfer belts 52 with a friction force of the conveyance surfaces 52a. That is, the articles W are drawn in the first direction X by the first holder 4, the second holder 6, and the transfer belts 52. In addition, in placing the articles W on the conveyance surfaces 52a, the articles W are also placed on the placement surface 31d of the base plate 31. The placement surface 31d has a small friction coefficient and functions as a sliding surface. The articles W are drawn in the first direction X by the first holder 4, the second holder 6, and the transfer belts 52, with a load thereof being supported by the base plate 31. The articles W are drawn toward the base plate 31 until the first holder 4 and the second holder 6 reach the second position. In this manner, the articles W are placed on the base plate 31.

Suction of the articles W by the first holder 4 and the second holder 6 may be canceled at any time after drawing of the articles W toward the base plate 31 is completed.

Subsequently, in step S109, the articles W are carried out. The arm controller 26 moves the robot arm 110 to move the hand 100 to the target position of the articles W. At this time, the travel controller 25 may cause the carrier 15 to travel as necessary. When the hand 100 reaches the target position, the belt controller 211 operates the motor 51 of the first driver 5 to move the first holder 4 and the second holder 6 forward. The articles W are pushed forward by the first holder 4 and the second holder 6, and drawn forward by the conveyance surfaces 52a of the transfer belts 52. Finally, the articles W are placed at the target position. In this manner, transfer of the two articles W is completed.

When transfer of the two articles W is completed, processes in step S101 and subsequent steps are repeated. The processes in step S101 and subsequent steps are repeated until none of the articles W at the start position is carried out.

The hand 100 may hold and convey only one article W at one transfer depending on the size, placement situations, and others of the articles W. For example, in a case where articles W are large, the hand 100 may hold one article W by both the first holder 4 and the second holder 6. In a case where the last one article W in the up-down direction is held, any one of the first holder 4 and the second holder 6 may hold this article W.

Alternatively, in a case where a target article W is located at a position recessed from surrounding articles W, the hand 100 may hold the target article W by only one of the first holder 4 and the second holder 6. For example, to stably load articles W, these articles W tend to be arranged and stacked such that the side surfaces the articles W are substantially aligned. In such a case, the side surfaces of the articles W, that is, the positions of surfaces facing the hand 100 in the first direction X, are substantially the same. At the top of articles W, however, surplus articles W or articles W with irregular sizes are sometimes placed. Such articles W may be stacked in a recessed position to prevent the articles W from falling in some cases. That is, the positions of side surfaces of the articles W in the first direction X may be different from the positions of side surfaces of other articles W. In other cases, a side surface of any one of articles W may be positioned at a position recessed from side surfaces of the other articles W because of displacement occurring during repetition of the transfer, for example.

In such cases, the article W at the recessed position can be appropriately held by adjusting the position of at least one of the first holder 4 and the second holder 6 in the first direction X. Even an article W in a narrow space can be accessed by bringing not the entire hand 100 but only the first holder 4 or the second holder 6 close to the article W. That is, since other articles W are arranged around the article W at the recessed position, a part of the hand 100, for example, the base 3, might interfere with the other articles W. It is possible to cause the first holder 4 or the second holder 6 to reach a target article W while avoiding interference of the hand 100 with other articles W and others by advancing the first holder 4 or the second holder 6 in the first direction X. In addition, only one of the first holder 4 and the second holder 6 can be advanced in the first direction X by adjusting the position of one of the first holder 4 and the second holder 6 in the first direction X independently of the other. **In** this manner, one of the first holder 4 and the second holder 6 suitable for the target article W can be selected.

After the article W at the recessed position is held by one of the first holder 4 and the second holder 6, the belt controller 211 may draw the first holder 4 and the second holder 6 in the first direction X to a position at which a side surface of the article W at the recessed position is aligned with a side surface of its adjacent article W. Thereafter, the adjustor 9 sets both the first holder 4 and the second holder 6 in the retracted state, and aligns the positions of the first holder 4 and the second holder 6 in the first direction X. The belt controller 211 may move the first holder 4 and the second holder 6 to two articles W whose side surfaces are aligned in the first direction X and then the suction controller 212 may suck the articles W individually corresponding to the first holder 4 and the second holder 6. In this manner, the article W at the recessed position is drawn by one of the first holder 4 and the second holder 6 to a position at which the side surface of the article W is aligned with the side surface of the other article W, and finally, the two articles W are held by both the first holder 4 and the second holder 6 at a time. As a result, conveyance efficiency can be enhanced.

In addition, the maximum adjustment amount of the upper second holder 6 in the first direction X is larger than the maximum adjustment amount of the lower first holder 4 in the first direction X. That is, the second holder 6 can advance to a greater extent in the first direction X. As described above, an article located at a position recessed from other articles is often located at the top of the stacked articles W. Therefore, by advancing the second holder 6 to a greater extent in the first direction X, a larger number of articles W can be held.

In the case of holding one or two articles W directly placed on the floor, in step S106, the arm controller 26 moves the robot arm 110 such that the base plate 31 approaches as close to the floor as possible. In the case where the articles W are directly placed on the floor, the base plate 31 cannot be located at a height substantially equal to or below the bottom of the articles W. However, in the hand 100, since the motor 51 does not project from the bottom surface 31b of the base plate 31, the base plate 31 is allowed to approach as close to the floor as possible. Accordingly, articles W held by the first holder 4 are easily drawn onto the base plate 31.

In addition, in the case of holding one or two articles W directly placed on the floor, before the articles W are drawn to the base plate 31 in step S107, the elevation controller 29 operates the elevator 57 and moves the first holder 4 and the second holder 6 upward in the second direction Z. Accordingly, the articles W held by the first holder 4 are lifted upward. In this state, the belt controller 211 operates the motor 51 of the first driver 5 to retract the first holder 4 and the second holder 6 to the second position. At an appropriate timing when a part of the articles W reaches to a position above the base plate 31, the elevation controller 29 operates the elevator 57 and moves the first holder 4 downward in the second direction Z. Accordingly, the articles W held by the first holder 4 are placed on the placement surface 31d of the base plate 31 and the conveyance surfaces 52a of the transfer belts 52. Thereafter, the articles W are drawn toward the base plate 31 until the first holder 4 and the second holder 6 reach the second position. In this manner, the articles W are placed on the base plate 31. Processes in step S108 and subsequent steps are similar to the processes described above.

The hand 100 is used in the transfer of articles W described above so that conveyance efficiency of the articles W can be thereby enhanced. Specifically, only one of the first holder 4 and the second holder 6 can be advanced in the first direction X by adjusting the relative positions of the first holder 4 and the second holder 6 in the first direction X by the adjustor 9. Accordingly, an article W located at a position recessed from other articles W can be accessed only by one of the first holder 4 and the second holder 6. As a result, the article W at the recessed position can also be appropriately held. Further, even in a case where a side surface of an article W has unevenness in the first direction X, the first holder 4 and the second holder 6 can appropriately hold portions at different positions in the first direction X.

The adjustor 9 adjusts the position of the first holder 4 in the first direction X independently of the second holder 6, and adjusts the position of the second holder 6 in the first direction X independently of the first holder 4. Accordingly, only one of the first holder 4 and the second holder 6 can be advanced in the first direction X, and both the first holder 4 and the second holder 6 can be advanced in the first direction X. As a result, holding of articles W can be achieved flexibly for articles W in various situations and articles W having side surfaces with various shapes.

Further, the adjustor 9 can advance the upper second holder 6 to a greater extent in the first direction X than the lower first holder 4. Thus, the second holder 6 can appropriately hold even an article W which is located at the top of the articles W and whose side surface is not aligned with other articles W.

Furthermore, the hand 100 can adjust the distance from the first holder 4 to the second holder 6 in the second direction Z, that is, the relative positions of the first holder 4 and the second holder 6 in the second direction Z. The hand 100 appropriately adjusts the distance from the first holder 4 to the second holder 6 to thereby appropriately hold two articles W at a time. Accordingly, as compared to the case of conveying articles W one by one by the hand 100, conveyance efficiency of the articles W is enhanced.

The sizes of two articles W that can be held at a time depend on the relative positions of the first holder 4 and the second holder 6 in the second direction Z. The adjustment of the relative positions of the first holder 4 and the second holder 6 in the second direction Z can enlarge the range of size of two articles W that can be held at a time. Even in a case where the hand 100 holds one article W, the application range of holdable articles W can be enlarged by adjusting the relative positions of the first holder 4 and the second holder 6 in the second direction Z. That is, limitation of size of articles W that can be held by the hand 100 depends on the relative positions of the first holder 4 and the second holder 6 in the second direction Z. A larger article W can be held by increasing the distance between the first holder 4 and the second holder 6 in the second direction Z. To hold articles W appropriately, the holding position is also important in relation to the centroid of the articles W. The articles W can be held at an appropriate position in relation to the centroid of the articles W by adjusting the relative positions of the first holder 4 and the second holder 6 in the second direction Z. That is, in the relationship to the centroid of the articles W, the application range of articles W that can be appropriately held can be enlarged. **In** the manner described above, the application range of holdable articles W is enlarged irrespective of the number of articles W so that conveyance performance of the hand 100 can be thereby enhanced.

Movement of the second holder 6 in the second direction Z is achieved by two-stage movement including movement of the first mover 71 and movement of the second mover 72. One of the adjustable driver 81 and the fixed driver 82 drives the first mover 71, and the other of the adjustable driver 81 and the fixed driver 82 drives the second mover 72. Accordingly, the position of the second holder 6 in the second direction Z can be adjusted not only in the adjustable range by the adjustable driver 81 but also in the range obtained by adding the adjustable range by the adjustable driver 81 to a constant amount of movement by the fixed driver 82. That is, while the configuration of the second driver 8 is simplified by achieving a part of movement of the second holder 6 by the fixed driver 82, the range in which the position of the second holder 6 can be arbitrarily adjusted can be enlarged by combining the adjustable driver 81 and the fixed driver 82.

The second direction Z is the up-down direction, the second mover 72 is located above the first mover 71, the adjustable driver 81 drives the first mover 71, and the fixed driver 82 drives the second mover 72. Since the adjustable driver 81 has a complicated configuration as compared to the fixed driver 82, the adjustable driver 81 tends to be heavier than the fixed driver 82. Since the relatively heavy adjustable driver 81 is located below, the centroid of the hand 100 can be lowered.

Specifically, the adjustable driver 81 is an electric cylinder, and the fixed driver 82 is an air cylinder. An electric cylinder tends to be generally heavier than an air cylinder. In the configuration in which the adjustable driver 81 is an electric cylinder and drives the first mover 71, the relatively heavy electric cylinder can be located relatively below. Accordingly, the centroid of the hand 100 can be lowered.

As a result of enlargement of the application range of articles W as described above, the weight of articles W held by the first holder 4 and the second holder 6 can increase. Since the hand 100 includes the two transfer belts 52, a force of drawing articles W is increased by the transfer belts 52. Accordingly, even heavier articles W can be appropriately drawn toward the base 3 by the first holder 4, the second holder 6, and the transfer belts 52.

Furthermore, movement of the second holder 6 in the second direction Z is achieved by combining the adjustable driver 81 and the fixed driver 82 so that the amount of movement of the second holder 6 can be thereby adjusted within a range wider than the range adjustable by the adjustable driver 81.

### <<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

The robot 1 may not include the carrier 15 and the equipment housing 16. For example, the robot 1 may be fixed. The hand 100 is applied not only to the robot 1 and may be applied to automatic machines or the like that perform fixed operation.

Holding of articles W by the hand 100 is not limited to suction. For example, the first holder 4 and the second holder 6 may include fingers that perform an opening/closing action. That is, the first holder 4 and the second holder 6 may be grippers.

The type of holding of the first holder 4 may be different from the type of holding of the second holder 6. For example, the first holder 4 may be a suction pad and the second holder 6 may be a gripper.

Although the first holder 4 and the second holder 6 are moved together in the first direction X by the first driver 5, but the present disclosure is not limited to this example. That is, the first holder 4 and the second holder 6 may be each moved by different drivers in the first direction X.

The device that drives the first holder 4 and the second holder 6 in the first direction X, that is, the first driver 5, is not limited to a belt-driven device. For example, the first driver 5 may be a feed screw mechanism. That is, the carriage 56 may be moved by a feed screw in the first direction X.

The number of the transfer belts 52 of the first driver 5 is not limited to two. The number of the transfer belts 52 may be one or three or more.

The second holder 6 may be immovable in the second direction Z relative to the first holder 4. That is, the relative positions of the first holder 4 and the second holder 6 in the second direction Z may be unchangeable. In this case, the guide 7 and the second driver 8 are omitted in the hand 100.

The adjustor 9 may be capable of adjusting the position of only one of the first holder 4 and the second holder 6 in the first direction X. For example, the adjustor 9 may not change the position of the first holder 4 in the first direction X while changing only the position of the second holder 6 in the first direction X. In this case, the first adjustor 9A is omitted.

The first driver 91 of the first adjustor 9A is not limited to an air cylinder. The first driver 91 may be an electric cylinder, a feed screw mechanism, a rack-and-pinion, a linkage mechanism, a belt-driven mechanism, or other mechanisms. The first driver 91 may arbitrarily change the adjustment amount of the position of the first holder 4 in the first direction X. The second driver 95 of the second adjustor 9B is not limited to an air cylinder. The second driver 95 may be an electric cylinder, a feed screw mechanism, a rack-and-pinion, a linkage mechanism, a belt-driven mechanism, or other mechanisms. The second driver 95 may arbitrarily change the adjustment amount of the position of the second holder 6 in the first direction X. The type of the second driver 95 may be different from the type of the first drivers 91.

The configuration that moves the second holder 6 in the second direction Z is not limited to the guide 7 and the second driver 8. For example, a configuration in which the guide 7 includes only the first mover 71 and the first guide 74, the second holder 6 is attached to first mover 71, and the second driver 8 is only the adjustable driver 81 that moves the first mover 71 in the second direction Z may be employed. The adjustable driver 81 is not limited to the electric cylinder including the ball screw mechanism. The adjustable driver 81 may be a rack-and-pinion or a belt-driven mechanism.

The second driver 8 may adjust the amount of movement of the second holder 6 in the second direction Z not continuously but stepwise, that is, discretely. Alternatively, the second driver 8 may switch the position of the second holder 6 in the second direction Z selectively between the first position and the second position, that is, may be incapable of adjusting the amount of movement of the second holder 6. The second driver 8 is not limited to an electric cylinder or an air cylinder. The second driver 8 may be a feed screw mechanism, a linkage mechanism, a belt-driven mechanism, or other mechanisms.

The second direction Z as a movement direction of the second holder 6 is not limited to the direction substantially orthogonal to the base plate 31, that is, the up-down direction. The second direction Z may be a direction substantially parallel to the base plate 31, that is, the horizontal direction. With this configuration, the hand 100 can hold two laterally disposed articles W at a time by the first holder 4 and the second holder 6. Even in this case, articles W of various sizes in various weight balances can be appropriately held by adjusting the horizontal interval between the first holder 4 and the second holder 6. In this case, the adjustor 9 adjusts the positions in the first direction X of the first holder 4 and the second holder 6 that are horizontally arranged, independently of each other.

The hand 100 may include one or more additional holders in addition to the first holder 4 and the second holder 6. The additional holders may be capable or incapable of adjusting the distance from the first holder 4 in the second direction Z. From the viewpoint of using the multiple transfer belts 52 or avoiding projection from the bottom surface 31b of the base plate 31, only the first holder 4 may be used without the second holder 6.

The hand 100 may not include the imager 19. For example, in a case where arrangement or other features of articles W before holding are known, the imager 19 is unnecessary. Alternatively, an imager separated from the robot 1 may be used.

Articles W are not limited to cardboard boxes. The articles W are not limited to boxes, and may be hemp bags accommodating grain or other substances. In this case, the first holder 4 and the second holder 6 are preferably not suction pads but grippers.

The flowchart of FIG. 10 is merely an example. The steps in the flowchart may be changed, replaced, added, omitted, or the like as appropriate. Further, the order of steps in the flowchart may be changed or serial processings may be performed in parallel.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

### [Aspects]

The embodiment described above are a specific example of the following aspects.

(Aspect 1) A hand 100 includes: a base 3; a first holder 4 that is supported to be movable in a predetermined first direction X with respect to the base 3 and holds an article W; a second holder 6 that is aligned with the first holder 4 in a second direction Z intersecting with the first direction X, is supported to be movable in the first direction X with respect to the base 3, and holds the article W; a first driver 5 that moves the first holder 4 and the second holder 6 in the first direction X; and an adjustor 9 that adjusts a position of one of the first holder 4 and the second holder 6 in the first direction X independently of the other.

In this configuration, the position of one of the first holder 4 and the second holder 6 in the first direction X is adjusted by the adjustor 9, independently of movement of the first holder 4 and the second holder 6 in the first direction X by the first driver 5. Accordingly, only one of the first holder 4 and the second holder 6 can be advanced in the first direction X by adjusting relative positions of the first holder 4 and the second holder 6 in the first direction X. As a result, an article W located at a position recessed from other articles W can be accessed only by one of the first holder 4 and the second holder 6 so that the articles W can be appropriately held.

(Aspect 2) In the hand 100 of Aspect 1, the adjustor 9 includes a first adjustor 9A that adjusts a position of the first holder 4 in the first direction X independently of the second holder 6, and a second adjustor 9B that adjusts a position of the second holder 6 in the first direction X independently of the first holder 4.

In this configuration, the positions of both the first holder 4 and the second holder 6 in the first direction X can be adjusted independently of each other. The relative positions of the first holder 4 and the second holder 6 in the first direction X can be more flexibly adjusted. As a result, articles W in various situations and articles W with various shapes can be more flexibly held.

(Aspect 3) In the hand 100 of Aspect 1 or Aspect 2, a maximum adjustment amount of the position of the first holder 4 in the first direction X by the first adjustor 9A is different from a maximum adjustment amount of the position of the second holder 6 in the first direction X by the second adjustor 9B.

In this configuration, the first adjustor 9A and the second adjustor 9B are used separately so that variations of the relative positions of the first holder 4 and the second holder 6 in the first direction X can be thereby increased.

(Aspect 4) In the hand 100 of any one of Aspects 1 to 3, a position of the first holder 4 in the first direction X when the first holder 4 is most advanced from the base 3 in the first direction X by adjustment by the first adjustor 9A is different from a position of the second holder 6 in the first direction X when the second holder 6 is most advanced from the base 3 in the first direction X by adjustment by the second adjustor 9B.

In this configuration, the distance between the first holder 4 and the second holder 6 in the first direction X can be changed among in the case of adjusting only the position of the first holder 4 in the first direction X, the case of adjusting only the position of the second holder 6 in the first direction X, and the case of adjusting both the positions of the first holder 4 and the second holder 6 in the first direction X. That is, it is possible to increase variations in the distance between the first holder 4 and the second holder 6 in the first direction X. Accordingly, two articles W whose positions in the first direction X are different can be held by the first holder 4 and the second holder 6. Alternatively, various articles W with side surfaces having unevenness in the first direction X can be held by the first holder 4 and the second holder 6.

(Aspect 5) **In** the hand 100 of any one of Aspects 1 to 4, the second direction Z is an up-down direction, the second holder 6 is located above the first holder 4, and a position of the second holder 6 in the first direction X when the second holder 6 is farthest from the base 3 in the first direction X by adjustment by the second adjustor 9B is farther from the base 3 in the first direction X than a position of the first holder 4 in the first direction X when the first holder 4 is farthest from the base in the first direction X by adjustment by the first adjustor 9A.

In this configuration, the upper second holder 6 can be advanced to a greater extent in the first direction X than the lower first holder 4. Accordingly, an article W at the top of stacked articles W can be appropriately held by the second holder 6.

(Aspect 6) The hand 100 of any one of Aspects 1 to 5 further includes: a guide 7 that supports the second holder 6 such that the second holder 6 is movable in the second direction Z; and a second driver 8 that moves the second holder 6 in the second direction Z.

In this configuration, relative positions of the first holder 4 and the second holder 6 in the second direction Z as well as in the first direction X can be adjusted. The application range of articles W that can be held by the hand 100 can be enlarged by adjusting the relative positions of the first holder 4 and the second holder 6 in the second direction Z. For example, two juxtaposed articles W can be respectively held by the first holder 4 and the second holder 6. At this time, articles W of various sizes can be appropriately held by adjusting the distance from the first holder 4 to the second holder 6 in the second direction Z in accordance with the sizes of the two articles W. Even in the case of holding one article W by the first holder 4 and the second holder 6, articles W of various sizes can be appropriately held by adjusting the distance from the first holder 4 to the second holder 6 in the second direction Z. As a result, the application range of holdable articles W is enlarged, and conveyance performance of the hand 100 can be enhanced.

## Claims

1. A hand comprising:
a base;
a first holder that is supported to be movable in a predetermined first direction with respect to the base and holds an article;
a second holder that is aligned with the first holder in a second direction intersecting with the first direction, is supported to be movable in the first direction with respect to the base, and holds the article;
a first driver that moves the first holder and the second holder in the first direction; and
an adjustor that adjusts a position of one of the first holder and the second holder in the first direction independently of the other.

2. The hand according to claim 1, wherein
the adjustor includes a first adjustor that adjusts a position of the first holder in the first direction independently of the second holder, and a second adjustor that adjusts a position of the second holder in the first direction independently of the first holder.

3. The hand according to claim 2, wherein
a maximum adjustment amount of the position of the first holder in the first direction by the first adjustor is different from a maximum adjustment amount of the position of the second holder in the first direction by the second adjustor.

4. The hand according to claim 2, wherein
a position of the first holder in the first direction when the first holder is most advanced from the base in the first direction by adjustment by the first adjustor is different from a position of the second holder in the first direction when the second holder is most advanced from the base in the first direction by adjustment by the second adjustor.

5. The hand according to claim 4, wherein
the second direction is an up-down direction,
the second holder is located above the first holder, and
a position of the second holder in the first direction when the second holder is farthest from the base in the first direction by adjustment by the second adjustor is farther from the base in the first direction than a position of the first holder in the first direction when the first holder is farthest from the base in the first direction by adjustment by the first adjustor.

6. The hand according to any one of claims 1 to 5, further comprising:
a guide that supports the second holder such that the second holder is movable in the second direction; and
a second driver that moves the second holder in the second direction.
